# EUROPEAN PATENT APPLICATION

(11) **EP 4 194 884 A1**
(43) Date of publication of application: **14.06.2023**
(21) Application number: 21852505.3
(22) Date of filing: 04.08.2021
(51) Int. Cl.: G01S 7/36, G01S 13/931

(54) **ELECTRONIC DEVICE, METHOD FOR CONTROLLING ELECTRONIC DEVICE, AND PROGRAM**

(30) Priority: 06.08.2020 JP 2020134134
(71) Applicant: Kyocera Corporation, Kyoto-shi, Kyoto 612-8501 (JP)
(72) Inventor: NISHIKIDO Masamitsu, Kyoto-shi, Kyoto 612-8501 (JP); SATO Masayuki, Kyoto-shi, Kyoto 612-8501 (JP); KAWAJI Satoshi, Kyoto-shi, Kyoto 612-8501 (JP); MURAKAMI Youhei, Kyoto-shi, Kyoto 612-8501 (JP)
(74) Representative: Viering, Jentschura & Partner mbB Patent- und Rechtsanwälte
(86) International application number: PCT/JP2021/029005
(87) International publication number: WO 2022/030560

(57) **Abstract**

An electronic device includes a transmission antenna and a reception antenna. The transmission antenna transmits a transmission wave. The reception antenna receives a reflection wave generated by reflection of the transmission wave. The electronic device detects an object based on a transmission signal transmitted as the transmission wave and a reception signal received as the reflection wave. The electronic device includes a controller that determines how frequently to transmit the transmission wave in each of multiple segments of frequencies at which the transmission wave is transmitted in accordance with noise powers in the multiple segments of the frequencies.

## Description

### CROSS-REFERENCE TO RELATED APPLICATIONS

This application claims priority of Japanese Patent Application No. 2020-134134 filed in Japan on August 6, 2020, the entire disclosure of which is hereby incorporated by reference.

### TECHNICAL FIELD

The present disclosure relates to an electronic device, a method for controlling an electronic device, and a program.

### BACKGROUND OF INVENTION

In fields such as industries related to automobiles, for example, technologies for measuring the distance between a host vehicle and a prescribed object are becoming increasingly important. In particular, in recent years, various studies have been conducted on radar (radio detecting and ranging ((RADAR)) technologies. In these technologies, the distance to an object is measured by transmitting radio waves, such as millimeter waves, and receiving waves reflected from an object, such as an obstacle. It is expected that the importance of such technologies for measuring distances so forth will further increase in the future with the development of technologies for assisting drivers in driving and technologies related to automated driving that allow part or all of the driving process to be automated.

As technologies for detecting objects by transmitting and receiving radio waves become more widely used, it is assumed that the performance of each device in detecting objects may be weakened due to interference from the radio waves transmitted by numerous other devices. A number of possible solutions have been proposed that could address this situation. For example, Patent Literature 1 proposes a technology in which radio wave interference is avoided by halting the transmission or reception of the radar device of the host device when interference occurs due to the angle between the antennas of the radar of the host device and another radar. Furthermore, Patent Literature 2 proposes a technology in which radio wave interference is avoided by sharing information between multiple radars and setting different frequency hopping patterns for the multiple radars.

### CITATION LIST

### PATENT LITERATURE

Patent Literature 1: Japanese Unexamined Patent Application Publication No. 2002-156442
Patent Literature 2: Japanese Unexamined Patent Application Publication No. 2005-195450

### SUMMARY

In an embodiment, an electronic device includes a transmission antenna and a reception antenna.

The transmission antenna is configured to transmit a transmission wave.

The reception antenna is configured to receive a reflection wave generated by reflection of the transmission wave.

The electronic device is configured to detect an object based on a transmission signal transmitted as the transmission wave and a reception signal received as the reflection wave.

The electronic device includes a controller configured to determine how frequently to transmit the transmission wave in each of multiple segments of frequencies at which the transmission wave is transmitted in accordance with noise powers in the multiple segments of the frequencies.

In an embodiment, a method for controlling an electronic device includes
transmitting a transmission wave using a transmission antenna;
receiving a reflection wave generated by reflection of the transmission wave using a reception antenna;
detecting an object based on a transmission signal transmitted as the transmission wave and a reception signal received as the reflection wave, and
determining how frequently to transmit the transmission wave in each of multiple segments of frequencies at which the transmission wave is transmitted in accordance with noise powers in the multiple segments of the frequencies.

In an embodiment, a program causes a computer to execute
transmitting a transmission wave using a transmission antenna;
receiving a reflection wave generated by reflection of the transmission wave using a reception antenna;
detecting an object based on a transmission signal transmitted as the transmission wave and a reception signal received as the reflection wave, and
determining how frequently to transmit the transmission wave in each of multiple segments of frequencies at which the transmission wave is transmitted in accordance with noise powers in the multiple segments of the frequencies.

### BRIEF DESCRIPTION OF THE DRAWINGS

FIG. 1 is a diagram for explaining the way in which an electronic device according to an embodiment is used.
FIG. 2 is a functional block diagram schematically illustrating the configuration of the electronic device according to the embodiment.
FIG. 3 is a diagram illustrating an example of noise power measured by the electronic device of the embodiment.
FIG. 4 is a diagram illustrating an example of the allocation of transmission frequency in accordance with noise power by the electronic device according to the embodiment.
FIG. 5 is a flowchart for describing operation of the electronic device according to the embodiment.
FIG. 6 is a functional block diagram schematically illustrating the configuration of the electronic device according to the embodiment.
FIG. 7 is a diagram illustrating an example of noise power measured by the electronic device of the embodiment.
FIG. 8 is a diagram illustrating an example of noise power measured by the electronic device of the embodiment.

### DESCRIPTION OF EMBODIMENTS

In a technology for detecting a prescribed object by receiving a reflection wave generated by a transmitted transmission wave being reflected off the object, it is desirable to reduce interference for the transmission wave. An object of the present disclosure is to provide an electronic device, a method for controlling an electronic device, and a program that are capable of reducing interference for a transmission wave in a technology in which an object is detected by receiving a reflection wave generated by a transmitted transmission wave being reflected off a prescribed object. According to an embodiment, there can be provided an electronic device, a method for controlling an electronic device, and a program that are capable of reducing interference for a transmission wave in a technology in which an object is detected by receiving a reflection wave generated by a transmitted transmission wave being reflected off a prescribed object. Hereafter, embodiments will be described in detail while referring to the drawings.

An electronic device according to an embodiment is mounted in a vehicle (mobile object) such as an automobile and is capable of detecting a prescribed object located in the surroundings of the mobile object. Accordingly, the electronic device according to the embodiment can transmit a transmission wave into the surroundings of the mobile object from a transmission antenna installed in the mobile object. In addition, the electronic device according to the embodiment can receive a reflection wave from a reception antenna installed in the mobile object, the reflection wave being generated by the transmission wave being reflected. At least one out of the transmission antenna and the reception antenna may be, for example, provided in a radar sensor or the like installed in the mobile object.

Hereinafter, as a typical example, a configuration will be described in which the electronic device according to the embodiment is mounted in an automobile such as a passenger vehicle. However, the electronic device according to the embodiment is not limited to being mounted in an automobile. The electronic device of the embodiment may be mounted in any of a variety of mobile objects such as self-driving cars, buses, taxis, trucks, motorcycles, bicycles, ships, aircraft, helicopters, agricultural equipment such as tractors, snowplows, sweepers, police cars, ambulances, and drones. Furthermore, the electronic device according to the embodiment is not necessarily limited to being mounted in mobile objects that move under their own power. For example, the mobile object in which the electronic device according to the embodiment is mounted may be a trailer part towed by a tractor. The electronic device according to the embodiment can measure the distance or the like between a sensor and a prescribed object in a situation where at least one out of the sensor and the object can move. The electronic device according to the embodiment can measure the distance or the like between the sensor and the object even when both the sensor and the object are stationary. Automobiles included in the present disclosure are not limited by overall length, width, height, displacement, capacity, or load capacity. For example, automobiles of the present disclosure include automobiles having a displacement greater than 660 cc, and automobiles having a displacement less than or equal to 660 cc, i.e., so-called light automobiles. The automobiles included in the present disclosure are not limited to so-called gasoline-powered vehicles, and may also include automobiles that use electricity as part or all of their energy and utilize motor power.

First, an example of detection of an object performed by the electronic device according to the embodiment will be described.

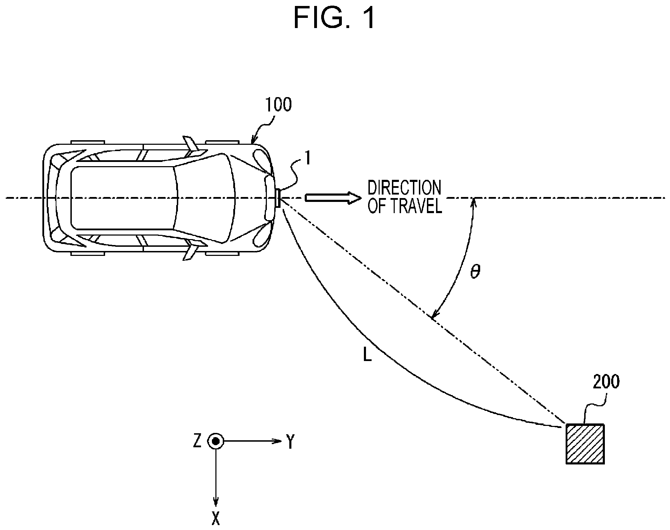

FIG. 1 is a diagram for explaining the way in which the electronic device according to the embodiment is used. FIG. 1 illustrates an example in which the electronic device according to the embodiment is installed in a mobile object, the electronic device being equipped with a transmission antenna and a reception antenna.

An electronic device 1 according to the embodiment is installed in a mobile object 100 illustrated in FIG. 1. The electronic device 1 includes a transmission antenna and a reception antenna. The electronic device 1 according to the embodiment may be mounted in (for example, built into) the mobile object 100 illustrated in FIG. 1. The specific configuration of the electronic device 1 will be described below. As described below, the electronic device 1 may include, for example, at least one out of a transmission antenna and a reception antenna. The mobile object 100 illustrated in FIG. 1 may be a vehicle such as an automobile like a passenger car, but may be any suitable type of mobile object. In FIG. 1, the mobile object 100 may, for example, be moving (traveling or slowing down) in the positive Y-axis direction (direction of travel) indicated in the figure, may be moving in another direction, or may be stationary and not moving.

As illustrated in FIG. 1, the electronic device 1 including a transmission antenna is installed in the mobile object 100. In the example illustrated in FIG. 1, only one electronic device 1, which includes a transmission antenna and a reception antenna, is installed at the front of the mobile object 100. The position where the electronic device 1 is installed on or in the mobile object 100 is not limited to the position illustrated in FIG. 1, and may be another position, as appropriate. For example, the electronic device 1 illustrated in FIG. 1 may be installed at the left side, the right side, and/or the rear of the mobile object 100. The number of electronic devices 1 may be any suitable number of one or more depending on various conditions (or requirements) such as the range and/or accuracy of measurement in the mobile object 100. The electronic device 1 may be installed inside the mobile object 100. The inside of the mobile object 100 may be, for example, the space inside a bumper, the space inside the body, the space inside a headlight, or the operating space.

The electronic device 1 transmits an electromagnetic wave as a transmission wave from the transmission antenna. For example, when there is a prescribed object (for example, an object 200 illustrated in FIG. 1) in the surroundings of the mobile object 100, at least part of a transmission wave transmitted from the electronic device 1 will be reflected by the object and become a reflection wave. The reflection wave is, for example, received by the reception antenna of the electronic device 1, and in this way, the electronic device 1 installed in the mobile object 100 is able to detect the object.

The electronic device 1 including the transmission antenna may typically be a radar (radio detecting and ranging (RADAR)) sensor that transmits and receives radio waves. However, the electronic device 1 is not limited to being a radar sensor. The electronic device 1 according to the embodiment may be a sensor based on light detection and ranging or laser imaging detection and ranging (LIDAR) technologies utilizing light waves. These kind of sensors may include patch antennas, for example. Since technologies such as RADAR and LIDAR are already well known, detailed description thereof may be simplified or omitted as appropriate.

The electronic device 1 installed in the mobile object 100 illustrated in FIG. 1 receives, from the reception antenna, a reflection wave generated from a transmission wave transmitted from the transmission antenna. In this way, the electronic device 1 can detect the prescribed object 200 located within a prescribed distance from the mobile object 100. For example, as illustrated in FIG. 1, the electronic device 1 can measure a distance L between the mobile object 100, which is the host vehicle, and the prescribed object 200. The electronic device 1 can also measure the relative speed of the mobile object 100, which is the host vehicle, and the prescribed object 200. The electronic device 1 can also measure the direction (arrival angle θ) in which the reflection wave reflected from the prescribed object 200 arrives at the mobile object 100, which is the host vehicle. Hereafter, the angle at which a signal such as a reflection wave from the object 200 arrives at the host device will also be referred to as an "arrival angle".

The object 200 may be at least one out of, for example, an oncoming vehicle traveling in a lane adjacent to the mobile object 100, a car traveling next to the mobile object 100, and vehicles in front of and behind and traveling in the same lane as the mobile object 100. The object 200 may be any object that exists around the mobile object 100 such as a motorcycle, a bicycle, a stroller, a person such as a pedestrian, a living organism such as an animal or an insect, a guardrail, a median strip, a road sign, a sidewalk step, a wall, a manhole, or an obstacle. In addition, the object 200 may be in motion or stationary. For example, the object 200 may be an automobile that is parked or stationary in the surroundings of the mobile object 100.

In FIG. 1, the ratio of the size of the electronic device 1 to the size of the mobile object 100 does not necessarily represent the actual ratio. In FIG. 1, a state is illustrated in which the electronic device 1 is installed on the outside of the mobile object 100. However, in an embodiment, the electronic device 1 may be installed at any of various positions on or in the mobile object 100. For example, in an embodiment, the electronic device 1 may be installed inside a bumper of the mobile object 100 so that the electronic device 1 does not appear outside the mobile object 100.

Next, in describing the electronic device 1 according to the embodiment in more detail, the current state of the art based on a general millimeter-wave radar system will be described.

For example, in industries such as the automotive industry, advanced driver assistance systems (ADAS), such as automatic braking systems, are becoming ever more widely used, and sensing technologies are attracting ever more attention. Therefore, there is a growing demand for sensors such as millimeter-wave radar that are fast, accurate, and reliable, but less expensive. Among such sensors, devices that detect obstacles around a vehicle are required to accurately measure the distance to the obstacle and the direction of the obstacle with a high degree of reliability in the range where an obstacle needs to be detected. Millimeter-wave radar is often used as such a sensor.

In recent years, it has become possible to use multiple frequency bands for in-vehicle radar. Specifically, the 24 GHz band, the 77 GHz band, and the 79 GHz band are frequency bands that are already in use. In addition, the 140 GHz band is being considered, taking international cooperation into consideration, by frequency allocation authorities as a frequency band that is anticipated to be used in the future. The frequency allocation authorities are the Ministry of Internal Affairs and Communications (MIC) in Japan and the International Telecommunication Union (ITU) Radiocommunication Sector (ITU-R) worldwide.

As a ranging method based on the millimeter-wave radar technology described above, a frequency modulated continuous wave radar (FMCW) method, in which the frequency of the transmitted radio waves is varied constantly with time, is widely used. However, as millimeter-wave radar-equipped systems become more widespread, it is anticipated that the transmission signals of millimeter-wave radars installed in many automobiles and other vehicles will interfere with each other. When such interference occurs, it is expected that the accurate distance measurement and angle measurement performances of millimeter-wave radar will be degraded. In the FMCW method, the greater the width of frequency variation (bandwidth of frequencies used), the better the distance and angle measurement performance. On the other hand, the wider the range over which the frequency is varied, the higher the risk that the transmission signals of different radars will cause radio wave interference with each other, resulting in degradation of performance. Therefore, the electronic device 1 according to the embodiment is described as a device that can deal with such a situation.

Hereinafter, as a typical example, the transmission antenna of the electronic device 1 according to the embodiment will be described as transmitting radio waves in a frequency band such as a millimeter wave band (greater than or equal to 30 GHz) or a quasi-millimeter wave band (for example, around 20 GHz to 30 GHz). For example, the transmission antenna of electronic device 1 may transmit radio waves with a frequency bandwidth of 4 GHz, such as from 77 GHz to 81 GHz. For example, the transmission antenna of the electronic device 1 may transmit radio waves with a frequency bandwidth of at least any one of a 24 GHz band, a 77 GHz band, a 79 GHz band, and a 140 GHz band.

### (First Embodiment)

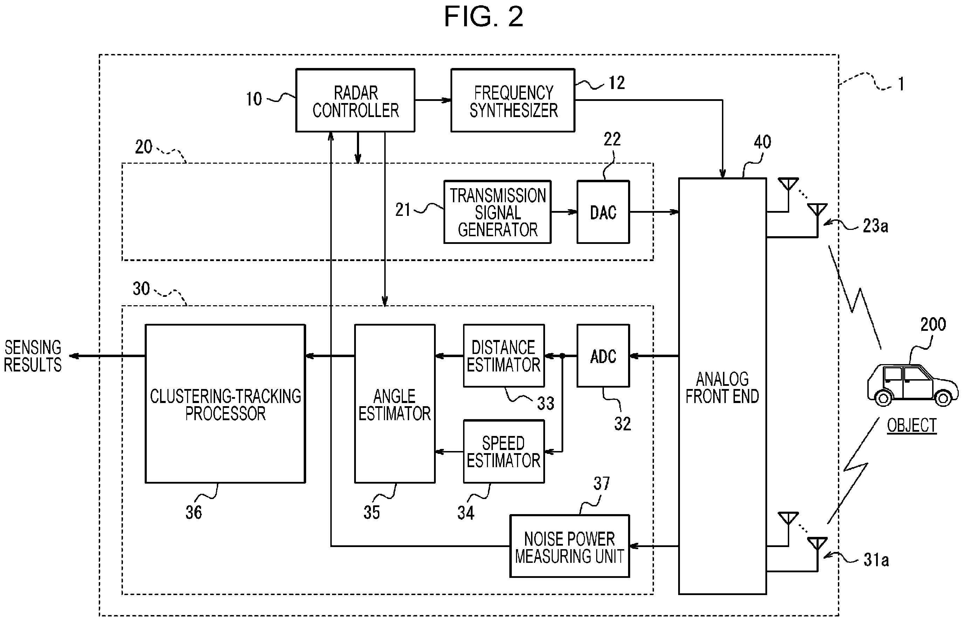

FIG. 2 is a functional block diagram schematically illustrating an example configuration of an electronic device 1 according to a First Embodiment. Hereafter, an example of the configuration of the electronic device 1 according to the First Embodiment will be described.

Frequency-modulated continuous wave radar (hereinafter referred to as FMCW radar) is often used to measure distances using millimeter-wave radar. In FMCW radar, the transmission signal is generated by sweeping the frequency of the radio waves to be transmitted. Therefore, for example, in a millimeter-wave FMCW radar that uses radio waves in the 79 GHz frequency band, the frequency of the radio waves being used will have a frequency bandwidth of 4 GHz, for example, from 77 GHz to 81 GHz. Radar in the 79 GHz frequency band is characterized by having a wider usable frequency bandwidth than other millimeter/quasi-millimeter wave radars, for example, in the 24 GHz, 60 GHz, and 76 GHz frequency bands. Hereafter, as an example, an embodiment will be described in which the transmission antenna of the electronic device 1 transmits radio waves with a frequency bandwidth of at least any one of a 24 GHz band, a 77 GHz band, a 79 GHz band, and a 140 GHz band. In the following description, descriptions that would be the same as or similar to those for general millimeter-wave radar will be simplified or omitted as appropriate.

As illustrated in FIG. 2, the electronic device 1 according to the First Embodiment may include a radar controller 10, a frequency synthesizer 12, a transmitter 20, a transmission antenna 23, a receiver 30, a reception antenna 31, and an analog front end 40. In the electronic device 1 according to the First Embodiment, the transmitter 20 may include a transmission signal generator 21 and a DAC 22. In the electronic device 1 according to the First Embodiment, the receiver 30 may include a ADC 32, a distance estimator 33, a speed estimator 34, an angle estimator 35, a clustering-tracking processor 36, and a noise power measuring unit 37. The electronic device 1 according to the First Embodiment does not have to include all of the functional units illustrated in FIG. 2 and may include functional units other than those illustrated in FIG. 2. The electronic device 1 illustrated in FIG. 2 may be configured using circuits that are basically the same as those used in general radars that use electromagnetic waves in the millimeter wave band or the like. However, in the electronic device 1 of the First Embodiment, the control performed by the radar controller 10 and the operation performed by the noise power measurement unit 37 are different from those of general radars of the related art.

The radar controller 10 can control overall operation of the electronic device 1 including control of each functional unit making up the electronic device 1. The radar controller 10 may include at least one processor, such as a central processing unit (CPU) or a digital signal processor (DSP), in order to provide control and processing power to perform various functions. The radar controller 10 may be implemented collectively in a single processor, in several processors, or in individual processors. The processors may be implemented as a single integrated circuit. An integrated circuit may also be referred to as an IC. Processors may be implemented as multiple integrated circuits and discrete circuits connected so as to be able to communicate with each other. The processors may be realized based on various other known technologies. In the First Embodiment, the radar controller 10 may be configured, for example, as a CPU (hardware) and a program (software) executed by the CPU. The radar controller 10 may appropriately include a memory as needed for the operation of radar controller 10.

In the First Embodiment, the radar controller 10 determines the frequency of a transmission wave to be transmitted from the transmission antenna 23. Operation of the radar controller 10 according to the First Embodiment will be further described later. The frequency of the transmission wave determined by the radar controller is input to the frequency synthesizer 12. Therefore, the radar controller 10 may be connected to the frequency synthesizer 12. As illustrated in FIG. 2, the radar controller 10 may be connected to the transmitter 20 and the receiver 30.

The frequency synthesizer 12 generates a carrier wave of the required frequency based on the frequency determined by the radar controller 10. The frequency synthesizer 12 may be based on typical millimeter-wave radar technology, for example. A carrier wave signal generated by the frequency synthesizer 12 is supplied to the analog front end 40. Therefore, the frequency synthesizer 12 may be connected to the analog front end 40.

In the transmitter 20, the transmission signal generator 21 generates a signal to be transmitted from the electronic device 1 (transmission antenna 23). In the electronic device 1 according to the First Embodiment, the transmission signal generator 21 may generate a transmission signal such as a chirp signal (transmission chirp signal). In particular, the transmission signal generator 21 may generate a signal having a frequency that varies periodically and linearly (linear chirp signal). For example, the transmission signal generator 21 may generate a chirp signal (79 GHz band) whose frequency periodically and linearly increases from 77 GHz to 81 GHz over time. For example, the transmission signal generator 21 may generate a signal whose frequency periodically repeatedly linearly increases (up chirp) and decreases (down chirp) from 77 GHz to 81 GHz over time. The signal generated by the transmission signal generator 21 may be set in advance in the radar controller 10, for example. Since chirp signals used in technical fields such as radar are known, detailed description thereof will be simplified or omitted as appropriate. The signal generated by the transmission signal generator 21 is supplied to the DAC 22. Therefore, the transmission signal generator 21 may be connected to the DAC 22.

The digital-to-analog converter (DAC) 22 has a function of converting a digital signal supplied from the transmission signal generator 21 into an analog signal. The DAC 22 may include a general digital-to-analog converter. The signal generated by analog conversion by DAC 22 is supplied to the analog front end 40. Therefore, the DAC 22 may be connected to the analog front end 40.

The analog front end 40 generates a transmission wave to be transmitted from the electronic device 1 (transmission antenna 23) based on a transmission modulation wave generated by the transmitter 20 and a carrier wave signal generated by the frequency synthesizer 12. The analog front end 40 may be based on typical millimeter-wave radar technology, for example. The transmission wave generated by the analog front end 40 is supplied to the transmission antenna 23. Therefore, the analog front end 40 may be connected to the transmission antenna 23.

The transmission antenna 23 may be an antenna array in which multiple transmission antennas are arranged in an array pattern. In FIG. 2, the configuration of the transmission antenna 23 is illustrated in a simplified manner. The transmission antenna 23 transmits a signal supplied from the analog front end 40 to outside the electronic device 1. The transmission antenna 23 may include a transmission antenna array used in a typical millimeter-wave radar. In particular, a transmission antenna 23a illustrated in FIG. 2 may be a transmission antenna for transmission of radio waves of a 79 GHz band, for example.

Thus, the electronic device 1 of the First Embodiment includes the transmission antenna 23 and can transmit a transmission signal (for example, a transmission chirp signal) as a transmission wave from the transmission antenna 23.

For example, as illustrated in FIG. 2, a case in which the object 200 exists in the surroundings of the electronic device 1 is assumed. In this case, at least part of the transmission wave transmitted from the transmission antenna 23 is reflected by the object 200. At least part of the wave reflected by object 200 out of the transmission wave transmitted from the transmission antenna 23 can be reflected towards the reception antenna 31.

The reception antenna 31 receives the reflection wave. Here, the reflection wave may be at least part of the wave reflected by the object 200 out of the transmission wave transmitted from the transmission antenna 23.

The reception antenna 31 may be an antenna array in which multiple reception antennas are arranged in an array pattern. In FIG. 2, the configuration of the reception antenna 31 is illustrated in a simplified manner. The reception antenna 31 receives a reflection wave generated by the transmission wave transmitted from the transmission antenna 23 being reflected. The reception antenna 31 may include a reception antenna array used in a typical millimeter-wave radar. In particular, a reception antenna 31a illustrated in FIG. 2 may be a reception antenna for reception of radio waves of a 79 GHz band, for example. The reception antenna 31 supplies a reception signal received as a reflection wave to the analog front end 40. Therefore, the reception antenna 31 may be connected to the analog front end 40.

The above-described analog front end 40 generates a reception modulation signal based on the carrier wave signal generated by the frequency synthesizer 12 and the reflection wave received by the reception antenna 31. The reception modulation signal generated by the analog front end 40 is supplied to the ADC 32 and the noise power measuring unit 37. Therefore, the analog front end 40 may be connected to the ADC 32 and the noise power measuring unit 37 of the receiver 30.

The analog-to-digital converter (ADC) 32 has a function of converting an analog signal supplied from the analog front end 40 into a digital signal. The ADC 32 may include a general analog-to-digital converter. A signal generated by digital conversion performed by the ADC 32 is supplied to the distance estimator 33 and the speed estimator 34. Therefore, the ADC 32 may be connected to the distance estimator 33 and the speed estimator 34.

The distance estimator 33 calculates the distance from the electronic device 1 to the object 200 (distance measurement) based on a digital signal supplied from the ADC 32. The speed estimator 34 calculates the relative speed of the object 200 with respect to the electronic device 1 (speed measurement) based on a digital signal supplied from the ADC 32. The result of distance estimation produced by the distance estimator 33 and the result of speed estimation produced by the speed estimator 34 may be supplied to the angle estimator 35. The angle estimator 35 calculates the azimuth angle (arrival angle) of the object 200 as seen from the electronic device 1 based on the result of distance estimation produced by the distance estimator 33 and the result of speed estimation produced by the speed estimator 34. At least one out of the result of distance estimation produced by the distance estimator 33, the result of speed estimation produced by the speed estimator 34, and the result of angle estimation produced by the angle estimator 35 may be supplied to the clustering-tracking processor 36.

Specifically, the receiver 30 performs a fast Fourier transform in a distance (Range) direction and a speed (Velocity) direction (2D-FFT), respectively, when I/Q transformed data is input thereto. After that, the receiver 30 suppresses false alarms and makes the probability of false alarms constant by removing noise points through, for example, universal asynchronous receiver transmitter (UART) and/or constant false alarm rate (CFAR) processing. The receiver 30 then obtains the position of the object 200 by, for example, performing arrival angle estimation for a point that satisfies the CFAR criteria. The information (sensing results) generated as a result of distance, speed, and angle measurements carried out by the receiver 30 may be output to outside the electronic device 1. The estimation of distance, velocity, and angle in the electronic device 1 according to the First Embodiment may be based on, for example, general millimeter-wave radar technology.

The electronic device 1 may include an interface that outputs the processing results (sensing results) produced by the clustering-tracking processor 36 to an external controller, for example. The clustering-tracking processor 36 outputs information regarding at least one out of the position, speed, and angle of the object 200 to outside the electronic device 1 as a controller area network (CAN) signal, for example. Sensing results output from the electronic device 1 according to the First Embodiment may be supplied to a controller such as an electronic control unit (ECU) outside the electronic device 1, for example.

Thus, the electronic device 1 according to the First Embodiment may include the transmission antenna 23 that transmits a transmission wave and a reception antenna 31 that receives a reflection wave generated by the transmission wave being reflected. With this configuration, the electronic device 1 according to the First Embodiment may detect an object based on a transmission signal transmitted as a transmission wave and a reception signal received as a reflection wave.

The noise power measuring unit 37 measures the noise power of an analog signal supplied from the analog front end 40. In the First Embodiment, the noise power measuring unit 37 may measure the noise power of radio waves received by the reception antenna 31. For example, the noise power measuring unit 37 may measure the noise power of a signal received by the reception antenna 31 when a transmission wave is not being transmitted from the transmission antenna 23. In addition, for example, the noise power measuring unit 37 may measure the noise power of a signal received by the reception antenna 31 at a timing at which transmission of a transmission wave is not set in the frame of the transmission wave.

As described later, the electronic device 1 according to the First Embodiment can transmit and/or receive radio waves in multiple segments of frequencies. Therefore, the noise power measuring unit 37 may measure the noise power at multiple segments of the frequencies at which the transmission wave is received. The noise power measuring unit 37 may also measure the noise power in the multiple segments of the frequencies at which the transmission wave is received based on the noise power in the multiple segments of the frequencies at which a reflection wave is received. In this case, the noise power measuring unit 37 may measure the noise power in the multiple segments of the frequencies at which the transmission wave is received based on the average noise power in the multiple segments of the frequencies at which the reflection wave is received.

Information on the noise power measured by the noise power measuring unit 37 is supplied to the radar controller 10. Therefore, the noise power measuring unit 37 may be connected to the radar controller 10. Based on the noise power information supplied from the noise power measuring unit 37, the radar controller 10 determines how frequently to transmit the transmission wave in each of the multiple segments of the frequencies at which the transmission wave is transmitted. These operations are described in further detail below. The radar controller 10 may also control the operation of at least one of the transmitter 20 and the receiver 30 based on the noise power information supplied from the noise power measuring unit 37.

Next, operation of the electronic device 1 according to the First Embodiment will be described.

The electronic device 1 according to the First Embodiment can transmit radio waves in multiple segments of frequencies. Therefore, the electronic device 1 according to the First Embodiment may transmit a transmission wave comparatively more frequently in segments having a low noise power among multiple segments of frequencies, for example. On the other hand, the electronic device 1 according to the First Embodiment may transmit a transmission wave comparatively less frequently in segments having a high noise power among multiple segments of frequencies, for example. Hereafter, this operation will be described in more detail using examples.

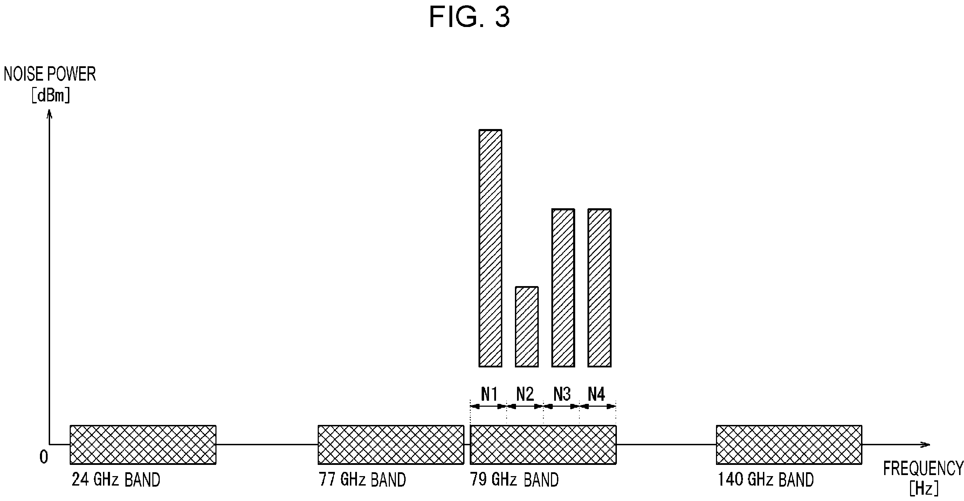

FIG. 3 is a diagram for explaining an example of noise power in segments of the frequencies of the radio wave transmitted and/or received by the electronic device 1 of the First Embodiment. In FIG. 3, the horizontal axis represents the frequency of the transmitted and/or received radio wave, and the vertical axis represents the noise power at each frequency.

As illustrated in FIG. 3, the electronic device 1 according to the First Embodiment may divide the 79 GHz frequency band into four segments, namely, N1, N2, N3, and N4, in order to transmit and/or receive radio waves. In the electronic device 1 according to the First Embodiment, the noise power measuring unit 37 can measure the noise power in each of the four segments illustrated in FIG. 3 when radio waves are received in the four segments.

Let us suppose that the noise power measuring unit 37 measured the noise power in the four segments N1 to N4, and, as illustrated in FIG. 3, the noise power in segment N2 was the lowest. Let us further suppose that, as illustrated in FIG. 3, the noise powers in segments N3 and N4 are higher than the noise power in segment N2 and lower than the noise power in segment N1. Let us also suppose that, as illustrated in FIG. 3, the noise power in segment M1 is highest among the four segments N1 to N4. Information on the noise power measured in each of the segments by the noise power measuring unit 37 is supplied to the radar controller 10.

The radar controller 10 determines how frequently to transmit the transmission wave in the four segments N1 to N4 based on the noise powers of the respective segments measured by the noise power measuring unit 37. For example, in the example illustrated in FIG. 3, the noise power is lowest in the segment N2 out of the four segments N1 to N4. Therefore, when the transmission wave is transmitted in segment N2, the risk of electromagnetic interference is assumed to be low. Accordingly, the radar controller 10 may set how frequently to transmit the transmission wave in the segment N2 to be high. On the other hand, in the example illustrated in FIG. 3, the noise power is highest in the segment N1 out of the four segments N1 to N4. Therefore, it is assumed that the risk of electromagnetic interference will be high when the transmission wave is transmitted in the segment N1. Accordingly, the radar controller 10 may set how frequently to transmit the transmission wave in the segment N1 to be low. In the present disclosure, the term "how frequently" can include time, frequency, percentage, or a combination of these concepts.

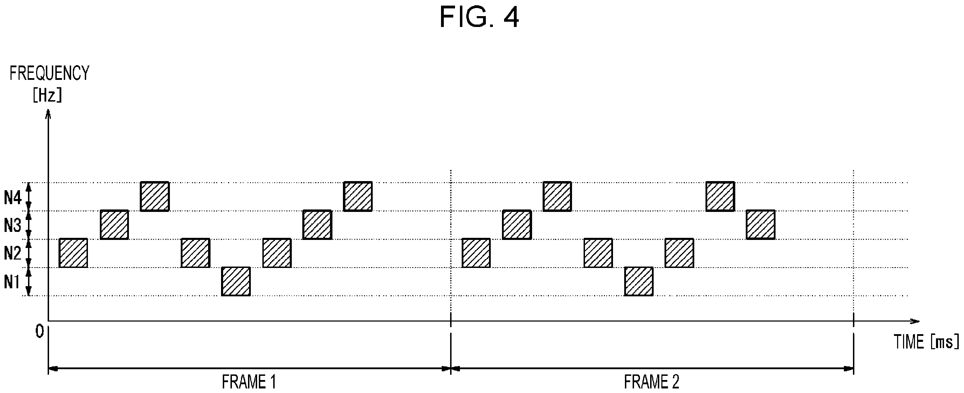

FIG. 4 illustrates an example of radio wave frequency segments allocated in a frame of the transmission wave transmitted by the electronic device 1 according to the First Embodiment. In FIG. 4, the horizontal axis represents the temporal length of the transmission frame, and the vertical axis represents the segments of the frequencies at which radio waves are transmitted at times within the transmission frame.

In each of frame 1 and frame 2 of the transmission wave illustrated in FIG. 4, how frequently the timing of radio wave transmission is allocated to the frequency segments N1 to N4 is as follows.
Segment N1: One Time
Segment N2: Three Times
Segment N3: Two Times
Segment N4: Two Times

Thus, the radar controller 10 may set how frequently the transmission wave is transmitted to be relatively high (for example, three times in a single frame) in the segment N2 in which the noise power measured by the noise power measuring unit 37 is relatively low. On the other hand, the radar controller 10 may set how frequently the transmission wave is transmitted to be relatively low (for example, once in a single frame) in segment N1 in which the noise power measured by the noise power measuring unit 37 is relatively high.

In FIG. 4, an example is illustrated in which the transmission timing of radio waves is allocated the same number of times (how frequently) in the frequency segments N1 to N4 in frame 1 and frame 2. However, the number of times (how frequently) the timing of radio wave transmission is allocated to segments N1 to N4 of the frequencies in each frame of the transmission wave may be different. In FIG. 4, the timing of radio wave transmission is allocated to segments N1 to N4 of the frequencies in only frame 1 and frame 2. However, based on the same concept, the timing of radio wave transmission may be allocated to segments N1 to N4 of the frequencies in frame 3 and beyond.

As illustrated in FIGs. 3 and 4, the radar controller 10 may set how frequently the transmission wave is transmitted to be higher in segments in which the noise power is low, out of the segments N1 to N4. In other words, in the example illustrated in FIGs. 3 and 4, how frequently the transmission wave is transmitted may be set so as to increase as the segment noise power decreases (N1 > N3 = N4 > N2). As illustrated in FIGs. 3 and 4, the radar controller 10 may set how frequently the transmission wave is transmitted to be highest in a segment having the lowest noise power, out of the segments N1 to N4. In other words, in the example illustrated in FIGs. 3 and 4, how frequently the transmission wave is transmitted may be set so as to be highest (three times in one frame) in the segment N2, which is the segment having the lowest noise power.

On the other hand, as illustrated in FIGs. 3 and 4, the radar controller 10 may set up how frequently the transmission wave is transmitted to be lower in segments in which the noise power is high, out of the segments N1 to N4. In other words, in the example illustrated in FIGs. 3 and 4, how frequently the transmission wave is transmitted may be set so as to decrease as the segment noise power increases (N2 < N3 = N4 < N1). As illustrated in FIGs. 3 and 4, the radar controller 10 may set how frequently the transmission wave is transmitted to be lowest in a segment having the highest noise power, out of the segments N1 to N4. In other words, in the example illustrated in FIGs. 3 and 4, how frequently the transmission wave is transmitted may be set so as to be highest (one time in one frame) in the segment N1, which is the segment having the highest noise power.

The radar controller 10 setting "how frequently the transmission wave is transmitted to be higher/lower" may mean, for example, setting the number of times the transmission wave is transmitted in one frame to be higher/lower. On the other hand, setting "how frequently the transmission wave is transmitted to be higher/lower" may mean, for example, setting the total number of times the transmission wave is transmitted in multiple frames to be higher/lower. The radar controller 10 setting "how frequently the transmission wave is transmitted to be higher/lower" may mean, for example, setting the time percentage with which the transmission wave is transmitted to be higher (longer time)/lower (shorter time) in one frame. The radar controller 10 setting the "how frequently the transmission wave is transmitted to be higher/lower" may mean, for example, setting the time percentage with which the transmission wave is transmitted to be higher (longer time)/lower (shorter time) in multiple frames.

The radar controller 10 may set the relationship between the highness/lowness of the noise powers in the respective segments and the lowness/highness of how frequently the transmission wave is transmitted based on a prescribed function, for example. Here, the prescribed function may be a linear function such as a proportional relationship or a nonlinear function such as an inversely proportional relationship, or any other of various prescribed functions. The radar controller 10 may also store in advance the correspondence between the highness/lowness of the noise powers in the respective segments and the lowness/highness of how frequently the transmission wave is transmitted.

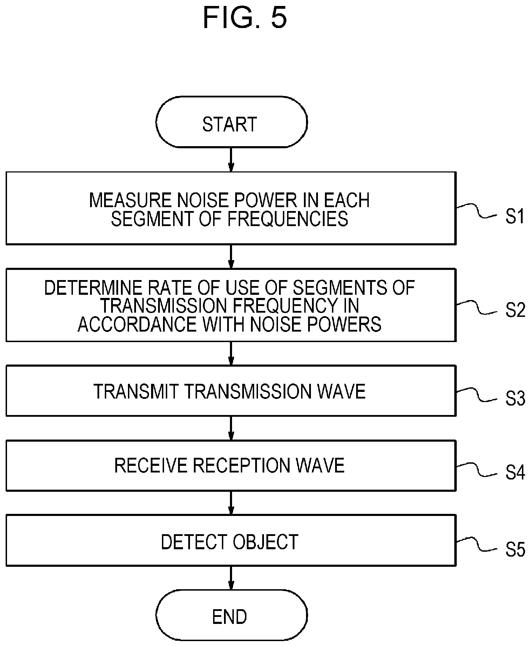

FIG. 5 is a flowchart for describing operation of the electronic device 1 according to the First Embodiment. The operation illustrated in FIG. 5 may begin, for example, at the point in time when the electronic device 1 begins an operation of detecting an object.

When the operation illustrated in FIG. 5 begins, the noise power measuring unit 37 of the electronic device 1 measures the noise power in each of multiple segments of the frequencies at which the transmission wave is transmitted (Step S 1). In Step S1, the noise power measuring unit 37, for example, measures the noise power (for example, average value) in each of the plural segments N1 to N4 as illustrated in FIG. 3.

In Step S 1, the noise power measuring unit 37 may measure the noise power based on a reception signal received at that point in time. On the other hand, in Step S1, the noise power measuring unit 37 may measure the noise power based on a reflection wave received in Step S4 of the previous cycle of the operation illustrated in FIG. 5.

Once the noise power has been measured in the multiple segments in Step S1, the radar controller 10 of the electronic device 1 determines how frequently to transmit the transmission wave in each of the multiple segments in accordance with the noise powers in the multiple segments (Step S2). In other words, in Step S2, the radar controller 10 may determine the usage rate (how frequently used) of each of the segments of the transmission frequencies in accordance with the noise powers measured by the noise power measuring unit 37.

Once the respective usage rates (how frequently used) of the segments of the transmission frequencies have been determined in Step S2, the radar controller 10 sets the frequencies and transmission timing of the transmission wave in accordance with the determined usage rate (how frequently used) of each segment. Once preparation of the transmission wave is completed in this way, the radar controller 10 performs control so that the transmitter 20 transmits the transmission wave (from the transmission antenna 23) (Step S3). In Step S3, the radar controller 10 may perform frequency hopping for the transmission wave in the multiple segments of the frequencies at which the transmission wave is transmitted.

Once the transmission wave has been transmitted in Step S3, when there is an object in the surroundings, at least part of the transmission wave is reflected by the object. The receiver 30 of the electronic device 1 receives (from the reception antenna 31) a reflection wave reflected by the object (Step S4).

When a reflection wave is received in Step S4, the receiver 30 detects an object based on a transmission signal transmitted as a transmission wave and a reception signal received as a reception wave (Step S5).

The electronic device 1 may repeat the operation illustrated in FIG. 5 in a periodic or non-periodic manner. The electronic device 1 may also halt the operation illustrated in FIG. 5 at a point in time when halting of the operation of detecting an object is requested.

Thus, in the electronic device 1 according to the First Embodiment, the radar controller 10 determines how frequently to transmit the transmission wave in the plurality of segments of the frequencies at which the transmission wave is transmitted in accordance with the respective noise powers in the multiple segments of the frequencies at which the transmission wave is transmitted. In this case, the radar controller 10 may transmit the transmission wave more frequently in a segment having a lower noise power among the multiple segments of the frequencies at which the transmission wave is transmitted. The radar controller 10 may transmit the transmission wave most frequently in a segment having the lowest noise power among the multiple segments of the frequencies at which the transmission wave is transmitted. On the other hand, the radar controller 10 may transmit the transmission wave less frequently in a segment having a higher noise power among the multiple segments of the frequencies at which the transmission wave is transmitted. The radar controller 10 may transmit the transmission wave least frequently in a segment having the highest noise power among the multiple segments of the frequencies at which the transmission wave is transmitted.

The electronic device 1 according to the First Embodiment divides the frequency band that is used into multiple segments and measures the power in each of the divided segments. The electronic device 1 controls the usage rate of the frequency band in which the transmission wave is transmitted based on the measured noise powers. Therefore, the effect of interference between multiple radars can be reduced. The electronic device 1 according to the First Embodiment can actively utilize the existence of multiple frequency bands (for example, 24 GHz, 77 GHz, 79 GHz, and 140 GHz bands) as allocated frequencies, as in a millimeter wave radar, for example. The electronic device 1 according to the First Embodiment may subject a transmission signal having a FMCW transmission frequency or a pulse compression transmission frequency, to frequency hopping within the transmission frame inside any of the frequency bands mentioned above. This enables the electronic device 1 according to the First Embodiment to be more resistance to interference between multiple radars.

Thus, the electronic device 1 according to the First Embodiment may divide the frequency band of the system into multiple segments when determining the frequencies to use in frequency hopping, and the receiver 30 may calculate the noise power in each segment. The electronic device 1 according to the First Embodiment may then determine the usage rates of the segments used in the frequency hopping based on the noise powers. In this case, radar controller 10 may determine how often to use each segment, for example, at a ratio inversely proportional to the respective noise power.

The electronic device 1 according to the First Embodiment can reduce interference between transmission waves in technologies in which a prescribed object is detected by receiving a reflection wave generated by a transmitted transmission wave being reflected off the object.

For example, when an in-vehicle radar is used, the automobile or other vehicle equipped with the in-vehicle radar may move at high speed or change direction frequently. As such in-vehicle radars become more widely used, the number of vehicles equipped with radars will increase considerably, and interference from the transmission waves transmitted by the radars will need to be taken into account. The electronic device 1 according to the First Embodiment is able to reduce the effect of interference between multiple radars.

If, for example, an attempt were to be made to avoid interference in the way proposed in above-listed Patent Literature 1, it would be necessary to halt the transmission and/or reception of radio waves by the radar in order to avoid interference. However, during this period in which the transmission and/or reception of radio waves by the radar is halted, naturally, the radar will not function. During the period in which the functions of the radar are halted, it will not be possible to acquire information such as distance or angle measurements by radar.

In addition, for example, as proposed in the above-listed Patent Literature 2, an interface for exchanging information among multiple radars is required in order to transmit radio waves with different frequency hopping patterns in different emergencies. It is also necessary to perform timing synchronization between multiple radars in order to transmit radio waves in the manner proposed in Patent Literature 2. Various methods are used in radars such as FMCW, fast-chirp modulation (FCM), and pulse methods. However, in a method in which different hopping patterns are allocated while synchronizing timing, multiple radars need to employ the same method.

In contrast, the issues that arise in the proposal of Patent Literature 1 or 2 do not occur in the electronic device 1 according to the First Embodiment described above. In other words, with the electronic device 1 according to the First Embodiment, there is no need to halt the transmission and/or reception of radio waves by the radar in order to avoid interference, as proposed in Patent Literature 1. With the electronic device 1 according to the First Embodiment, there is also no need for multiple radars to adopt the same system, as proposed in Patent Literature 2.

### (Second Embodiment)

Next, an electronic device according to a Second Embodiment will be described.

The electronic device 1 according to the First Embodiment described above transmits a transmission wave in multiple (for example, four) segments of a particular frequency band (for example, the 79 GHz band), as illustrated in FIG. 3. Thus, in the electronic device 1 according to the First Embodiment described above, the multiple segments of the frequencies at which a transmission wave is transmitted may be segments obtained by dividing a specific frequency band. Therefore, the operation performed by the electronic device 1 according to the First Embodiment described above is also referred to as intra-band operation or in-band operation.

Thus, the intra-band operation (in-band operation) performed by the electronic device 1 according to the First Embodiment is performed within a specific frequency band. The specific frequency band is not limited to the 79 GHz band as illustrated in FIG. 3, and may be, for example, the 24 GHz band, the 77 GHz band, or the 140 GHz band.

In contrast, the electronic device of the Second Embodiment may transmit radio waves in multiple frequency bandwidths, such as the 24 GHz, 77 GHz, and 140 GHz bands, for example.

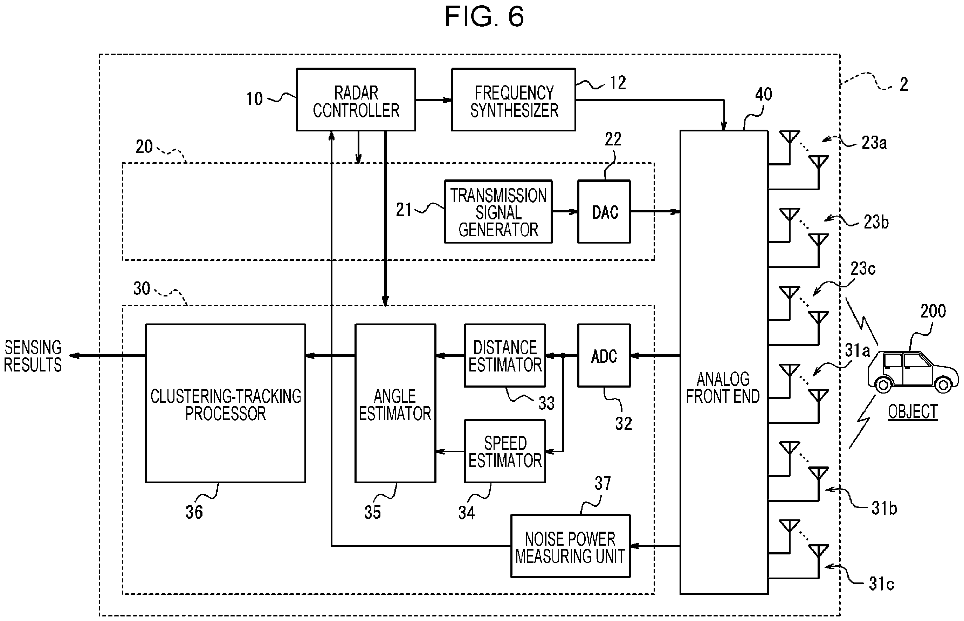

FIG. 6 is a functional block diagram schematically illustrating an example configuration of the electronic device according to the Second Embodiment. Hereafter, an example of the configuration of the electronic device according to the Second Embodiment will be described. The electronic device according to the Second Embodiment is realized by changing part of the electronic device 1 according to the First Embodiment illustrated in FIG. 2. Hereafter, the description of content that is similar to or the same as that of the electronic device 1 according to the First Embodiment illustrated in FIG. 2 will be simplified or omitted as appropriate.

As illustrated in FIG. 6, an electronic device 2 according to the Second Embodiment includes multiple pairs of the transmission antenna 23 and the reception antenna 31 in order to support multiple frequency bands of radio waves in the electronic device 1 of the First Embodiment illustrated in FIG. 2.

As illustrated in FIG. 6, the electronic device 2 according to the Second Embodiment includes a transmission antenna 23a, a transmission antenna 23b, and a transmission antenna 23c. Similarly, the electronic device 2 according to the Second Embodiment includes a reception antenna 31a, a reception antenna 31b, and a reception antenna 31c.

In the electronic device 2 according to the Second Embodiment, the transmission antenna 23a and the reception antenna 31a may transmit and receive radio waves of the 24 GHz band, for example. In the electronic device 2, the transmission antenna 23b and the reception antenna 3 1b may transmit and receive radio waves of the 77 GHz or 79 GHz band, for example. In the electronic device 2, the transmission antenna 23c and the reception antenna 31c may transmit and receive radio waves of the 140 GHz band, for example.

In the electronic device 2 according to the Second Embodiment illustrated in FIG. 6, the noise power measuring unit 37 may measure noise power in multiple frequency bandwidths, such as the 24 GHz band, the 77 GHz band, and the 140 GHz band, for example. In the electronic device 2 according to the Second Embodiment, the radar controller 10 may determine how frequently to transmit a transmission wave in multiple frequency bandwidths, such as, for example, the 24 GHz band, the 77 GHz band, and the 140 GHz band. In addition, in the electronic device 2 according to the Second Embodiment illustrated in FIG. 6, each functional part may be capable of supporting multiple frequency bandwidths, such as the 24 GHz band, the 77 GHz band, and 140 GHz band, for example.

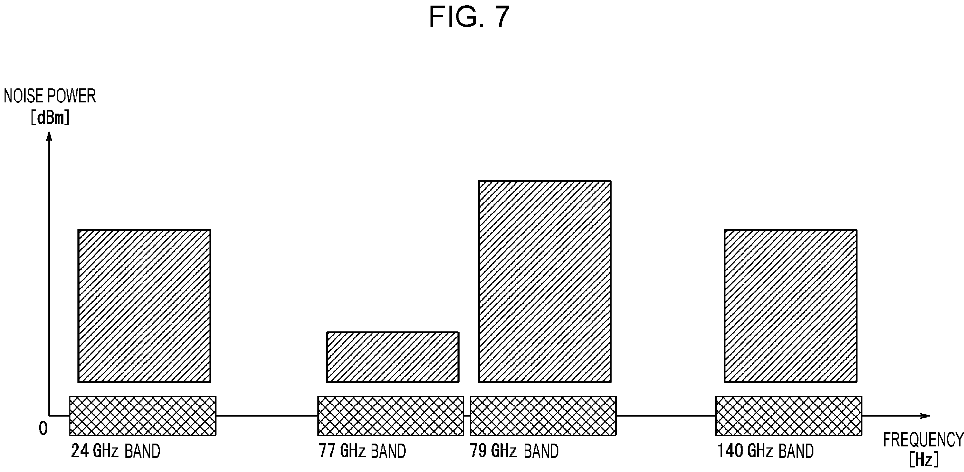

FIG. 7 is a diagram for explaining an example of noise power in segments of the frequencies of the radio waves transmitted and/or received by the electronic device 2 of the Second Embodiment. Similarly to as in FIG. 3, in FIG. 7, the horizontal axis represents the frequencies of the transmitted and/or received radio waves, and the vertical axis represents the noise power at each frequency.

As illustrated in FIG. 7, the electronic device 2 of the Second Embodiment may divide the frequency band into four segments, for example, the 24 GHz band, the 77 GHz band, the 79 GHz band, and the 140 GHz band in order to enable transmission and/or reception of radio waves. In the electronic device 2 according to the Second Embodiment, the noise power measuring unit 37 can measure the noise power in each of the four segments illustrated in FIG. 7 when radio waves are received in the four segments.

Let us suppose that the noise power measuring unit 37 measured the noise power in the four segments from the 24 GHz band to the 140 GHz band, and the noise power in the segment of the 77 GHz band was the lowest, as illustrated in FIG. 7. As illustrated in FIG. 7, let us also suppose that the noise power in the 24 GHz segment and the 140 GHz segment was higher than the noise power in the 77 GHz segment and lower than the noise power in the 79 GHz segment. As illustrated in FIG. 7, let us suppose that the noise power in the 79 GHz segment was the highest among the four segments from the 24 GHz band to the 140 GHz band. Information on the noise power measured in each of the segments by the noise power measuring unit 37 is supplied to the radar controller 10.

The radar controller 10 determines how frequently to transmit the transmission wave in the four segments from the 24 GHz band to the 140 GHz band based on the noise powers of the respective segments measured by the noise power measuring unit 37. For example, in the example illustrated in FIG. 7, the segment of the 77 GHz band has the lowest noise power among the four segments from the 24 GHz band to the 140 GHz band. Therefore, when a transmission wave is transmitted in the segment of the 77 GHz band, the risk of electromagnetic interference occurring is assumed to be low. Accordingly, the radar controller 10 may set how frequently to transmit the transmission wave in the segment of the 77 GHz band to be high. On the other hand, in the example illustrated in FIG. 7, for example, the segment of the 79 GHz band has the highest noise power among the four segments from the 24 GHz band to the 140 GHz band. Therefore, when a transmission wave is transmitted in the segment of the 79 GHz band, the risk of electromagnetic interference occurring is assumed to be high. Accordingly, the radar controller 10 may set how frequently to transmit the transmission wave in the segment of the 79 GHz band to be low.

Once how frequently to transmit the transmission wave in each of the segments has been determined, the radar controller 10 may set the frequency segments in which to transmit the radio waves and the timing of transmission of the radio waves in each frame of the transmission wave, based on the same concept as in the First Embodiment.

Thus, in the electronic device 2 according to the Second Embodiment described above, the multiple segments of the frequencies at which a transmission wave is transmitted may be segments belonging to multiple different frequency bands. The operations performed by the electronic device 2 according to the Second Embodiment described above are also referred to as inter-band operations.

The electronic device 2 according to the Second Embodiment can also reduce interference between transmission waves in technologies in which a prescribed object is detected by receiving a reflection wave generated by a transmitted transmission wave being reflected off the object.

### (Third Embodiment)

Next, an electronic device according to a Third Embodiment will be described.

The electronic device according to the Third Embodiment may have the same configuration as or a similar configuration to the electronic device 2 according to the Second Embodiment illustrated in FIG. 6. Hereafter, the description of content that is similar to or the same as that of the electronic device 1 according to the First Embodiment illustrated in FIG. 2 or the electronic device 2 according to the Second Embodiment illustrated in FIG. 6 will be simplified or omitted as appropriate.

The electronic device according to the Third Embodiment may perform an operation that is a combination of the intraband operation (in-band operation) in the First Embodiment and the interband operation in the Second Embodiment. In other words, the electronic device according to the Third Embodiment may further divide each of the four segments from the 24 GHz band to the 140 GHz band, illustrated in FIG. 7, for example, into one or more segments, as in the case of the 79 GHz band illustrated in FIG. 3.

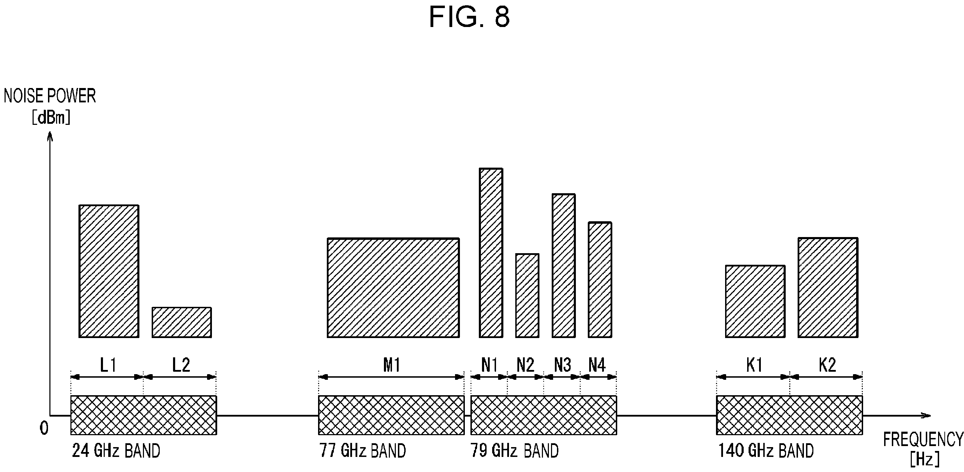

FIG. 8 is a diagram for explaining an example of noise power in segments of the frequencies of the radio waves transmitted and/or received by the electronic device according to the Third Embodiment. Similarly to as in FIGs. 3 and 7, in FIG. 8, the horizontal axis represents the frequencies of the transmitted and/or received radio waves, and the vertical axis represents the noise power at each frequency.

As illustrated in FIG. 8, the electronic device of the Third Embodiment may divide the frequency band into four segments, for example, the 24 GHz band, the 77 GHz band, the 79 GHz band, and the 140 GHz band. In addition, the electronic device according to the Third Embodiment may further divide each of the four segments into one or more segments.

In the example illustrated in FIG. 8, the electronic device according to the Third Embodiment further divides the segment of the 24 GHz band into two segments L1 and L2. In the example illustrated in FIG. 8, the electronic device according to the Third Embodiment does not divide the segment of the 77 GHz band into any more segments (divided into one segment M1). In the example illustrated in FIG. 8, the electronic device according to the Third Embodiment further divides the segment of the 79 GHz band into four segments N1 to N4. In the example illustrated in FIG. 8, the electronic device according to the Third Embodiment further divides the segment of the 140 GHz band into two segments K1 and K2.

Thus, the electronic device of the Third Embodiment may be capable of transmitting and/or receiving radio waves in nine segments as illustrated in FIG. 8. In the electronic device according to the Third Embodiment, the noise power measuring unit 37 can measure the noise power in each of the segments illustrated in FIG. 8 when radio waves are received in the nine segments.

Let us suppose that the noise power measuring unit 37 measured the noise power in the nine segments, and the noise power in the segment L2 of the 24 GHz band was the lowest, as illustrated in FIG. 8. As illustrated in FIG. 8, let us suppose that the noise power in the segment N1 of the 79 GHz band was highest among the nine segments. Information on the noise power measured in each of the segments by the noise power measuring unit 37 is supplied to the radar controller 10.

The radar controller 10 determines how frequently to transmit the transmission wave in the nine segments based on the noise powers of the respective segments measured by the noise power measuring unit 37. For example, in the example illustrated in FIG. 8, the noise power is lowest in the segment L2 of the 24 GHz band among the nine segments. Therefore, when a transmission wave is transmitted in the segment L2 of the 24 GHz band, the risk of electromagnetic interference occurring is assumed to be low. Accordingly, the radar controller 10 may set how frequently to transmit the transmission wave in the segment L2 of the 24 GHz band to be high. On the other hand, for example, in the example illustrated in FIG. 8, the noise power is highest in the segment N1 of the 79 GHz band among the nine segments. Therefore, when a transmission wave is transmitted in the segment N1 of the 79 GHz band, the risk of electromagnetic interference occurring is assumed to be high. Accordingly, the radar controller 10 may set how frequently to transmit the transmission wave in the segment N1 of the 79 GHz band to be low.

Once how frequently to transmit the transmission wave in each of the segments has been determined, the radar controller 10 may set the frequency segments in which to transmit the radio waves and the timing of transmission of the radio waves in each frame of the transmission wave, based on the same concept as in the Second Embodiment.

Thus, in the electronic device 2 according to the Third Embodiment, the multiple segments of the frequencies at which the transmission wave is transmitted may belong to any of multiple different frequency bands and may be segments obtained by dividing any of the multiple different frequency bands. The operation performed by the electronic device 2 according to the Third Embodiment described above is also referred to as a hybrid type of operation consisting of intraband operation and interband operation.

The electronic device according to the Third Embodiment can also reduce interference between transmission waves in technologies in which a prescribed object is detected by receiving a reflection wave generated by a transmitted transmission wave being reflected off the object.

The present disclosure has been described based on the drawings and examples, but it should be noted that a variety of variations and amendments may be easily made by one skilled in the art based on the present disclosure. Therefore, it should be noted that such variations and amendments are included within the scope of the present disclosure. For example, the functions included in each functional part can be rearranged in a logically consistent manner. Multiple functional parts and so forth may be combined into a single part or divided into multiple parts. Further, each embodiment according to the present disclosure described above does not need to be implemented exactly as described in the embodiment, and may be implemented with features having been combined or omitted as appropriate. A variety of variations and amendments to the content of the present disclosure can be made by one skilled in the art based on the present disclosure. Accordingly, such variations and amendments are included in the scope of the present disclosure. For example, in each embodiment, each functional part, each means, each step and so on can be added to other embodiments so long as there are no logical inconsistencies, or can be replaced with each functional part, each means, each step, and so on of other embodiments. In each embodiment, a plurality of each functional part, each means, each step, and so on can be combined into a single functional part, means, or step or divided into multiple functional parts, means, or steps. Each of the above-described embodiments of the present disclosure is not limited to faithful implementation of each of the described embodiments, and may be implemented by combining or omitting some of the features as appropriate.

The above-described embodiments do not have to be implemented only as the electronic device 1 or 2. For example, the embodiments described above may be implemented as a method of controlling a device such as the electronic device 1 or 2. For example, the embodiments described above may be implemented as a program executed by a device such as the electronic device 1 or 2.

As described above, in the electronic device according to each embodiment, multiple segments of the frequencies at which the transmission wave is transmitted may be included in at least one out of the 24 GHz, 77 GHz, 79 GHz, and 140 GHz bands. However, in each of the electronic devices, the multiple segments of frequencies at which the transmission wave is transmitted may be included in a frequency band other than the aforementioned frequency bands.

### REFERENCE SIGNS

- 1, 2: electronic device
- 10: radar controller
- 12: frequency synthesizer
- 20: transmitter
- 21: transmission signal generator
- 22: DAC
- 23: transmission antenna
- 30: receiver
- 31: reception antenna
- 32: ADC
- 33: distance estimator
- 34: speed estimator
- 35: angle estimator
- 36: clustering-tracking processor
- 37: noise power measuring unit
- 40: analog front end

## Claims

1. An electronic device comprising:
a transmission antenna configured to transmit a transmission wave; and
a reception antenna configured to receive a reflection wave generated by reflection of the transmission wave,
wherein the electronic device is configured to detect an object based on a transmission signal transmitted as the transmission wave and a reception signal received as the reflection wave,
the electronic device further comprising: a controller configured to determine how frequently to transmit the transmission wave in each of multiple segments of frequencies at which the transmission wave is transmitted in accordance with noise powers in the multiple segments of the frequencies.

2. The electronic device according to claim 1,
wherein the controller transmits the transmission wave more frequently in a segment having a lower noise power among the multiple segments of the frequencies.

3. The electronic device according to claim 1 or 2,
wherein the controller transmits the transmission wave most frequently in a segment having a lowest noise power among the multiple segments of the frequencies.

4. The electronic device according to any one of claims 1 to 3,
wherein the controller transmits the transmission wave less frequently in a segment having a higher noise power among the multiple segments of the frequencies.

5. The electronic device according to any one of claims 1 to 4,
wherein the controller transmits the transmission wave least frequently in a segment having a highest noise power among the multiple segments of the frequencies.

6. The electronic device according to any one of claims 1 to 5, further comprising:
a measuring unit configured to measure noise power in multiple segments of frequencies at which the transmission wave is received.

7. The electronic device according to claim 6,
wherein the measuring unit is configured to measure noise power in the multiple segments of the frequencies at which the transmission wave is received based on noise power in multiple segments of frequencies at which the reflection wave is received.

8. The electronic device according to claim 7,
wherein the measuring unit is configured to measure noise power in the multiple segments of the frequencies at which the transmission wave is received based on an average noise power in the multiple segments of the frequencies at which the reflection wave is received.

9. The electronic device according to any one of claims 1 to 8,
wherein the multiple segments of the frequencies at which the transmission wave is transmitted are segments obtained by dividing a specific frequency band.

10. The electronic device according to any one of claims 1 to 8,
wherein the multiple segments of the frequencies at which the transmission wave is transmitted are segments belonging to multiple different frequency bands.

11. The electronic device according to any one of claims 1 to 8,
wherein the multiple segments of the frequencies at which the transmission wave is transmitted are segments belonging to any of multiple different frequency bands and are obtained by dividing any of the multiple different frequency bands.

12. The electronic device according to any one of claims 1 to 11,
wherein the multiple segments of the frequencies at which the transmission wave is transmitted are included in at least any one of a 24 GHz band, a 77 GHz band, a 79 GHz band, and a 140 GHz band.

13. The electronic device according to any one of claims 1 to 12,
wherein the controller performs frequency hopping for the transmission wave in the multiple segments of the frequencies.

14. A method for controlling an electronic device, the method comprising:
transmitting a transmission wave using a transmission antenna;
receiving a reflection wave generated by reflection of the transmission wave using a reception antenna;
detecting an object based on a transmission signal transmitted as the transmission wave and a reception signal received as the reflection wave, and
determining how frequently to transmit the transmission wave in each of multiple segments of frequencies at which the transmission wave is transmitted in accordance with noise powers in the multiple segments of the frequencies.

15. A program for causing a computer to execute:
transmitting a transmission wave using a transmission antenna;
receiving a reflection wave generated by reflection of the transmission wave using a reception antenna;
detecting an object based on a transmission signal transmitted as the transmission wave and a reception signal received as the reflection wave, and
determining how frequently to transmit the transmission wave in each of multiple segments of frequencies at which the transmission wave is transmitted in accordance with noise powers in the multiple segments of the frequencies.
